# FASCICULE DE BREVET EUROPEEN

(11) **EP 1 873 938 B1**
(45) Date de publication et mention de la délivrance du brevet: **15.04.2009**
(21) Numéro de dépôt: 07290807.2
(22) Date de dépôt: 28.06.2007
(51) Int. Cl.: H04B 7/26

(54) **Système de communication le long d'un axe de transport guidé**
System zur Verbindung mit und zwischen Mobiltelefonen
Communication system along a guided transport way.

(30) Priorité: 30.06.2006 FR 0605949
(43) Date de publication de la demande: 02.01.2008
(73) Titulaire: ELTA, 31700 Blagnac (FR)
(72) Inventeur: Robin-Jouan, Yves, 91430 Igny (FR)
(74) Mandataire: Novagraaf IP

(56) Documents cités:
- EP-A- 1 705 810
- FR-A- 2 831 760
- US-A- 5 420 883
- US-A- 5 914 948
- US-A- 5 995 845
- US-A1- 2003 071 744

## Description

La présente invention se rapporte à un système de communication avec et entre des mobiles, circulant le long d'une Ligne de transport guidé, convenablement équipée de points d'accès et d'infrastructure pour les relier. Plus précisément, l'invention concerne l'architecture et de nouvelles fonctions originales du réseau de desserte sans fil entre les points d'accès (ou bornes) et les mobiles. Les mobiles sont des véhicules isolés, des trains classiques (voyageurs ou fret), des trains modulaires (plusieurs rames convoyées), des rames de métro. Le terme « convoi » désigne l'ensemble de ces mobiles. Dans la suite de l'exposé, le terme « train » lui est substitué par commodité, sans perte de généralité alors que le terme « mobile » est utilisé dans le sens générique des réseaux conventionnels.

Les applications de l'invention comprennent des services de communication pure, des services d'assistance et de sécurité, et des services à valeur ajoutée, le long d'une Ligne de transport guidé à l'air libre, en tranchée, dans un « canyon urbain » (entre des rangées d'immeubles) ou en tunnel :
- services de commande-contrôle de nature temps réel, notamment pour la formation et le pilotage de convois : ATC, CBTC (Automatic Train Control, Communication Based Train Control) ;
- services d'alarme ou d'urgence, en relation avec des centres opérationnels ;
- services de phonie opérationnelle entre trains et centre(s) de régulation ;
- services de gestion de flottes de voitures ou wagons ;
- services de suivi logistique par les opérateurs, ou par les clients par exemple pour le fret ;
- services de surveillance, y compris par collecte de signaux vidéo ;
- services d'infotainment (information et distraction des usagers), y compris en vidéo diffusée ou sélective, éventuellement à caractère commercial.

La Ligne peut être rectiligne, curviligne, voire refermée en boucle.

Voir FR-A-2 831 760 (ST2).

Le présent brevet constitue un complément au brevet MIMADIP (N° FR/23.23.05/FRA 0502901), du même inventeur, également déposé au nom de FREINRAIL Systèmes Ferroviaires SA. MIMADIP (MIcroMobilité et Accès Dynamique sous Internet Protocol) est un système de communication original pour trains le long d'une Ligne ou « Axe » de circulation guidée, qui exploite un partage de temps (TDMA) entre les trains et des bornes fixes disposées régulièrement ou non le long de la Ligne.

L'état de l'Art en la matière reste le même que celui du précédent brevet MIMADIP.

Le tableau de synthèse comparative ci après rappelle les avantages et inconvénients des solutions génériques de l'état de l'Art.

| **Familles de solutions** | **Applicabilité au Transport guidé** | |
|---|---|---|
| | Avantages | Inconvénients |
| V-UHF professionnelle 3RP à PMR depuis points hauts | Portée à faible débit Réutilisation canaux analogiques Ouverture de certains canaux (865-870 MHz) | Canalisation étroite (historique) Incompatibilité avec tunnels Peu de ressource disponible et menace de saturation |
| Réseaux Cellulaires 2G, 2G+, 3G | Couverture publique existante Possibilité déploiement privé (type GSM-R) | Priorités non assurées en public Coût élevé et lacunes couverture M obile-Mobile impossible sans infra |
| WLAN dont série 802.11 | Coût compétitif en infra Mobile-Mobile autant que Mobile-Infra | Portée & mobilité faibles Généralisation du cas pire à tous Saturation et interférences |
| WMAN dont série 802.16 | Faible coût en infra Portée optimisée pour chacun Débit adaptatif | Standard pour mobiles en attente Mobile-Mobile limité (option « mesh » distribué) |
| SATCOM | Large couverture sans infra Valeur ajoutée positionnement Evolution antennes électroniques | Problème masques & tunnels Délai de latence incompressible Agilité méca des antennes (coût) |

Le brevet MIMADIP prévoit pour toutes les bornes en infrastructure la mise en commun d'un cycle TDMA synchrone dans un canal isofréquence à une fréquence f1, suivant l'Axe de circulation, et généralise ce principe au cas de liaisons mobiles unidirectionnelles ou bidirectionnelles. Un tel TDMA global donne la meilleure garantie de connectivité et de maîtrise des interférences. Plusieurs canaux du même type à N fréquences sont utilisables pour diversifier et étendre les services, pour ramifier le déploiement (Ligne fourchue, Lignes à portion commune ou adjacente, zones de garage,...) ou pour assurer une ou des redondances chaudes 1+1 de certains services critiques. Les liaisons mobiles associées peuvent être co- ou contra-directionnelles.

La présente invention a pour objet des principes et des mécanismes de transmission non inclus dans le brevet MIMADIP, mais qui s'inscrivent dans la même organisation architecturale que MIMADIP, à savoir : une succession de « grappes », regroupant des stations jointives, sous l'autorité d'un contrôleur de grappe ou CPU (Cluster Protocol Unit), qui gère la mobilité au sein de la grappe et coopère avec ses voisins pour gérer la mobilité de grappe en grappe. Les grappes se succèdent au sein d'éventuels secteurs, au sens d'une partition de la couverture globale.

Avec MIMUFIP seules des liaisons contra-directionnelles sont considérées pour la desserte entre bornes et mobiles. Ces liaisons sont réalisées en duplex fréquentiel (FDD) ou temporel (TDD), le duplex pouvant être piloté de façon synchrone ou asynchrone. Les faisceaux directifs des antennes des bornes au sol restent orientés dans un même sens privilégié. Une symétrisation des faisceaux orientés à partir d'une seconde série de bornes est possible pour assurer la redondance de services critiques ou doubler la capacité du système.

Au lieu de considérer le partage d'une ressource isofréquence en TDMA à accès fixe ou dynamique (AD), MIMUFIP promeut une alternative à base de FDMA (Frequency Division Multiple Access) donnant accès à une série limitée de canaux fréquentiels tous identiques, et de largeur plus modeste. Au lieu d'allouer des tranches et des segments du cycle TDMA, les CPU allouent des canaux fréquentiels (en nombre m) aux différents mobiles, en minimisant les changements de canaux sous chaque emprise de CPU.

Une borne ou Point d'Accès Radio peut être équipée en multicanal d'ordre m (avec des antennes communes), ou être éclatée en n bornes monocanal (avec des antennes individuelles). C'est dans cette double signification qu'on parlera de Point d'Accès Radio Collectif (PARC) ou de Point d'Accès Radio Individuel (PARI) dans la suite de l'exposé. En pratique, mais sans exclusivité, les PARC pourront être avantageusement disposés de station en station, alors que les PARI seront plutôt répartis de façon plus serrée, c'est à dire disposés en station pour certains, mais également déportés en interstation. Il sera avantageux d'espacer régulièrement ces PARI, avec une récurrence géographique des canaux telle que f1, f2... fm, f1, f2..., fm, etc. Pour assurer une couverture continue avec chaque canal, la portée radio est supposée assurée entre un PARI fi et une position au droit du PARI fi suivant, sans pour autant que ces PARI communiquent forcément, du fait l'orientation des antennes ; cette règle est également applicable au cas des PARC.

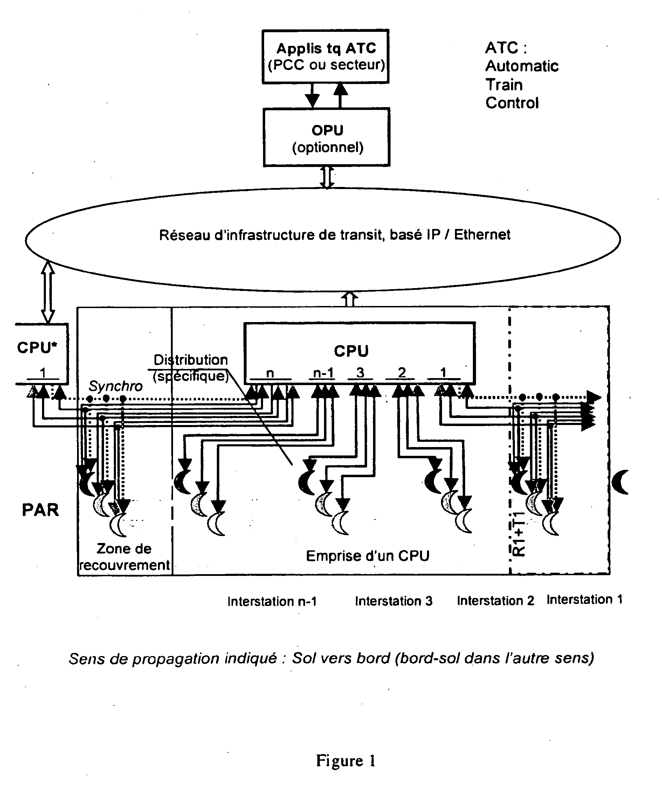

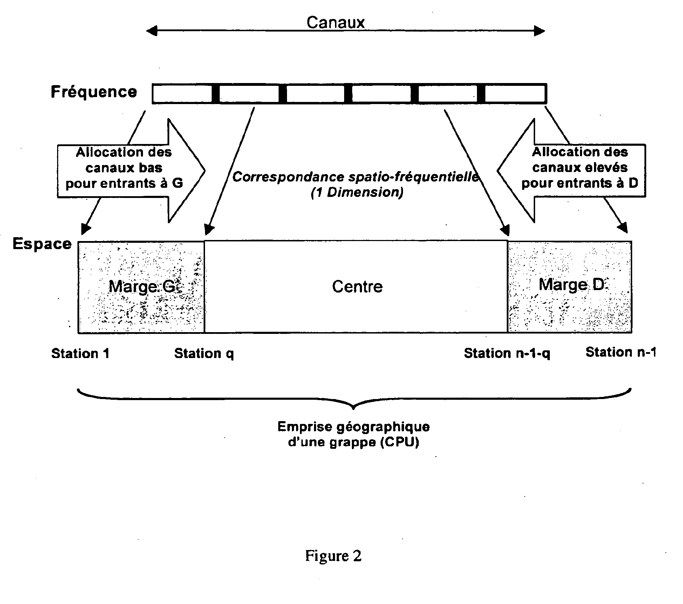

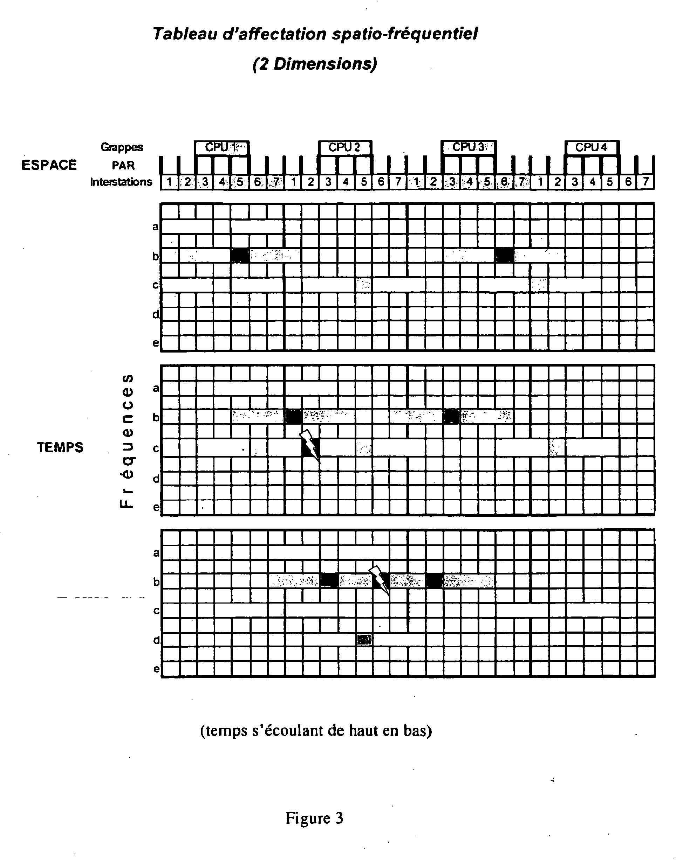

Les innovations propres à MIMUFIP étendent celles propres à MIMADIP et s'ajoutent à elles, d'où un ensemble de caractéristiques remarquables énoncées ci après :
- le réseau d'infrastructure considéré pour le transit entre des « bornes » fixes et les noeuds de raccordement des serveurs (Poste de Commande-Contrôle, Applications ATC de secteurs, par exemple) est un réseau géré sous IP (Internet Protocol) et sa suite, entre des noeuds constitués de commutateurs ou de routeurs IP, et des artères synchrones (SDH : Synchronous Data Hierarchy) ou asynchrones, c'est-à-dire utilisant des artères Ethernet (10, 100 , 1G ou 10 G basés paires de cuivre ou fibres optiques). Les éléments de MIMUFIP (noeuds de stations, noeuds de trains, radios) sont médiatisés selon les standards MIB (Management Information Base) et SNMP (Simple Network Management Protocol) véhiculés par la pile UDP/IP (Uniform Data Protocol), et gérables sur la même plateforme ouverte que celle de l'administration du réseau d'infrastructure.
- Le protocole IP est considéré en version v4, en v6 et ses versions ultérieures, avec les perfectionnements attendus de la mobilité hiérarchique et du routage ad-hoc. MIMUFIP accepte ainsi les standards les plus porteurs pour le réseau de transit, sans réinjecter de contrainte propre.
- La synchronisation éventuelle des stations, des bornes et des trains ne fait pas appel au réseau d'infrastructure, mais à des moyens et liaisons propres, relevant du réseau de distribution MIMUFIP, c'est-à-dire de liens fixes déployés entre les stations de grappes et les stations courantes, et entre les stations et leur bornes ou Point d'Accès Radio (PARC ou PARI), chacun -local ou déporté- étant équipé d'au moins un émetteur et d'un récepteur. De ce point de vue, le système s'affranchit nativement de la latence du réseau de transit et de ses variations. Le réseau de distribution MIMUFIP est de préférence réalisé à base de fibres optiques.
- Pour lutter contre la dispersion de propagation, à la basique diversité d'antennes (côté PAR et côté mobile) MIMUFIP ajoute une diversité de fréquence utilisant toutes les facilités des formats modernes. Les formats à diversité de fréquence actuellement considérés sont le saut ou la rampe de fréquence, l'étalement par séquence directe, la transmission multi-porteuses (OFDM ou COFDM : Coded Orthogonal Frequency Division Multiplex), ou les formes d'onde à très large bande (ULB : Ultra Large Bande ou UWB : Ultra Wide Band). MIMUFIP peut également inclure une diversité de liens entre un mobile et l'infrastructure, multiplexés en fréquence (f1 à fm) et donc strictement simultanés. En alternative au multiplex de fréquence, la diversité de liens peut aussi faire appel à un éventuel mécanisme de multiplexage secondaire en TDMA au sein des canaux.
- Pour supporter la couche MAC (Medium Access Control), le système dispose d'une fonction d'autolocalisation qui exploite directement des mesures instantanées et des seuils sur des variables de la couche physique, notamment la détection des passages des trains sous les rampes d'antennes fixes (PARC ou PARI) et procède à des échanges rapides de signalisation interne entre trains, PAR et stations, comprenant au moins les adresses MAC des trains. Chaque CPU tient à jour la liste des trains et leur positionnement schématique dans les interstations de son emprise (synopsis de situation). C'est à partir de ces informations qu'il aiguille convenablement les messages montants, sous forme de trames numérotées, vers les PAR (PARC ou PARI) d'émission en regard dudit train, à une fréquence particulière de la grille f1 à fm. Une substitution des PAR successifs (PARC ou PARI) est assurée par le CPU au rythme de progression du train dans son emprise.
- Les fonctions de micro-mobilité de la couche MAC de MIMUFIP sont complètes et peuvent s'enchaîner d'une grappe à la suivante afin assumer une couverture totale de la Ligne, en toute autonomie par rapport à d'autres couches superposées ou supérieures de mobilité, tant au niveau IP qu'au niveau applicatif. L'enchaînement est assuré en pratiquant un recouvrement d'interstation(s) entre 2 grappes contiguës (cf. figure 1). En cas de PAR déportés, la section entre deux PARC ou deux PARI de même fréquence fi se substitue à l'interstation et cette remarque vaut également pour la suite de l'exposé. Suivant l'orientation du canal (gauche à droite à l'émission sol sur la figure 1, suivant les flèches) qui détermine la numérotation des groupes de m PAR, le premier récepteur R1 de la grappe est relié à la dite grappe mais aussi dérivé vers la grappe immédiatement précédente (à droite sur la figure 1) ; la liaison n vers le dernier émetteur potentiel de la dite grappe est mise en réserve, mais le CPU surveille la dernière interstation n limitrophe de son emprise grâce à une dérivation pratiquée à partir du récepteur R1 de la grappe immédiatement suivante (à gauche sur la figure 1). La même configuration est généralisée aux m canaux fréquentiels. Pour une capacité de n motifs (groupe de m canaux) par grappe, l'emprise s'étendra donc sur n-1 interstations et 1 interstation (de surveillance, mais non d'émission) imbriquée avec la grappe suivante. Classiquement (mais sans exclusive) n = 4 à 8 ; l'emprise d'une grappe peut alors s'étendre sur 3 à 7 interstations (ou sections de Ligne entre PAR). Dans d'autres déploiements, on considère notamment n = 12, avec un recouvrement de 1 à 2, soit une emprise de 10 à 11 interstations. Rappelons que le terme interstation peut également se comprendre comme sections de Ligne entre PARC ou entre PARI de même canal.
- La synchronisation éventuelle est assurée à l'intérieur de la grappe par le CPU courant, et d'une grappe à l'autre (dans le sens de l'orientation déjà mentionnée) en mobilisant la ou les liaison(s) n réservées dans le paragraphe précédent. Cette ou ces liaison(s) - en pointillé dans la figure 1-, peut piloter directement le dernier groupe n d'émetteurs du CPU précédent ou être dirigée vers ce CPU précédent. De même, le CPU suivant -CPU* de la figure 1- peut piloter le dernier groupe n d'émetteurs du CPU courant. D'autres alternatives sont possibles, à partir d'une cascade de liens spécifiques de PAR à PAR, le long des voies (utilisation d'une fibre dédiée, par exemple).
- C'est le recouvrement d'une ou plusieurs interstations qui permet à une grappe d'anticiper la perception des entrées et sorties de trains dans son emprise, notamment dans le cas défavorable où les trains circulent dans le sens opposé à l'ouverture des récepteurs fixes (c'est-à-dire selon les flèches de la figure 1). Le recouvrement consomme de la capacité de l'infrastructure, et il faut donc ajuster le compromis mobilité/capacité. La représentation de la figure 1 adopte un recouvrement d'une seule interstation, pour n-1 interstations utiles par CPU, ce qui n'est qu'une illustration non restrictive de l'invention.
- Au niveau de la couche MAC, le mécanisme du CPU est purement déterministe : il gère le groupe de canaux fréquentiels f1 à fm, en allouant basiquement un canal par train. Ensuite, le CPU maintient l'allocation de fréquence à un même train, tant qu'il n'y a pas de conflit dans l'emprise et commande un changement de fréquence selon un critère adapté, s'il y a conflit entre 2 trains (qui se croisent ou se rattrapent). Dans une réalisation particulière du système le critère se rapporte à la durée de présence des trains dans l'emprise du CPU, par exemple le plus récemment admis change de fréquence. De cette manière la capacité du CPU est basiquement de m trains dans son emprise. Cette capacité peut être multipliée par l'adjonction éventuelle d'un multiplexage secondaire en partage de temps dans chacun des canaux, mais aussi par la réutilisation géographique (si l'opportunité de la répartition des trains le justifie). Des règles élémentaires sont définies pour une telle réutilisation géographique, d'une grappe à l'autre, à une distance moyenne proche de la longueur de leur emprise. Une méthode simple pour ce faire consiste à prendre pour objectif une correspondance spatio-fréquentielle entre le cycle et l'emprise d'une grappe (cf. figure 2), par exemple en associant les fréquences les plus basses à la marge gauche de l'emprise, les fréquences au centre de l'emprise et les fréquences élevées à la marge droite de l'emprise. A tout train entrant à gauche, le CPU alloue une fréquence basse ; à tout train entrant à droite, le CPU alloue une fréquence haute. Des substitutions de fréquences peuvent être opérées par le CPU dans les marges opposées et au centre de l'emprise. Avec cette méthode, l'allocation de fréquences est compartimentée grappe par grappe, sans optimiser la politique globale pour la Ligne.
- Dans une réalisation particulière, ce mécanisme d'accès MAC peut éventuellement être étendu par un multiplexage dans le temps au sein des canaux.
- Les allocations ou les réallocations des fréquences trains sont déclenchées par le CPU via les PAR courants concernés, par exemple en diffusant une séquence de doublets, chaque doublet contenant le numéro de la fréquence courante et le numéro et le numéro de la nouvelle fréquence sur lequel le train doit basculer. Le CPU réitère la commande jusqu'à son exécution.
- Selon un perfectionnement de l'invention, notamment destiné à faciliter le relayage et les communications train à train, le CPU diffuse le synopsis de l'allocation des fréquence et l'équipement de chaque train (TPU : Train Protocol Unit) recopie le synopsis tel qu'il le reçoit, au fil de l'eau. Le synopsis d'un CPU est propagé au CPU voisin, soit directement par la radio, soit par l'intermédiaire d'une extension des liaisons de synchro entre grappes (en pointillé dans la figure 1) sous forme bidirectionnelle, soit encore par l'intermédiaire des trains circulant entre les grappes.
- En alternative (A) à ces mécanismes de bas niveau, la tenue du synopsis peut exploiter des échanges de servitude sous IP entre CPU via le réseau de transit, en réutilisant des protocoles standards inter-routeurs de la suite IP (par exemple ICMP : Internet Control Message Protocol), une adaptation du protocole SNMP, ou un protocole spécifique directement au dessus de IP, en multipoint, comme le fait OSPF (Open Shortest Path Fi rst).
- En alternative (B) au mécanisme précédemment décrit de correspondance spatio-fréquentielle au sein d'une grappe, la disponibilité d'un synopsis étendu aux grappes voisines permet au CPU de pratiquer des allocations ou réallocations de fréquences différentiées, train par train, en imposant la réservation d'une fenêtre spatiale de garde, encadrant le train, où la réutilisation de fréquences est interdite (y compris si la fenêtre déborde sur les grappes voisines). La longueur de la fenêtre peut être celle d'une emprise de grappe, ou bien ajustée localement par le CPU courant. Il ne s'agit plus de gérer une correspondance fréquentielle à 1 dimension, mais un tableau croisant 1 dimension d'espace et 1 dimension de fréquence (cf. figure 3). Ce mécanisme, qui n'est plus compartimenté dans une grappe, est plus souple et performant que le précédent, mais il suppose une véritable coopération entre CPU, avec des échanges significatifs. En outre, les réallocations ne sont plus systématiques, mais elles peuvent subir des effets de cascade, voire d'avalanche, lorsque les trains s'accumulent dans une grappe.
- Pour expliciter le détail de l'alternative B, sur la figure 3, le temps se déroule verticalement et l'occupation des fréquences (a, b, c, d, e) par les trains est symbolisée par des carrés de couleurs vives. Certains états intermédiaires ont été sautés, pour une meilleure animation de la figure. Chaque colonne représente une interstation (ou une section entre PAR). Les fenêtres spatiales, choisies sur la figure 3 égales à une emprise de grappe, sont représentées horizontalement en couleurs pâles. Le cas du train jaune correspond à une allocation simple le long de la Ligne et ne pose aucun problème de circulation de grappe en grappe. Les cas des trains bleus et verts illustrent ce qui se passe lors du mouvement des trains en cas d'allocation multiples du même motif dans des grappes différentes. Les fenêtres s'intersecteraient à la 2^{ème} ligne avec les trains verts, à la 3^{ème} avec les trains bleus. Les CPU se concertent pour réallouer à la 3^{ème} ligne un nouveau motif (en rouge) à l'un des trains verts, par exemple à celui se déplace le moins vite ou qui a cumulé le moins de changements de motif. Cette description et le quantitatif de la figure 3 ne sont pas restrictifs du déploiement possible selon l'invention.
- Si le protocole IP utilisé sur le réseau de transit dispose de la mobilité HMIP v6 (Hierarchical Mobility Internet Protocol, selon l'acception de l'IETF) ou une mobilité de type plus avancé, les messages seront acheminés automatiquement depuis et vers les applications, en relative transparence, éventuellement avec quelques aléas au voisinage des frontières de grappe. Dans le cas contraire, ou pour s'affranchir des aléas, MIMUFIP pratique de l'encapsulation / décapsulation d'en-tête IP, donc du double en-tête (« tunneling ») sur le transit, entre le routeur de connexion au(x) serveur(s) et les routeurs de grappes de stations. Dans le sens montant vers les trains, une adresse externe générale de diffusion peut suffire ; l'ensemble routeur-CPU décapsule les en-têtes, le CPU lit les adresses capsulées et s'il est concerné réalise l'aiguillage convenable vers les PAR. Dans le sens descendant depuis les trains, les CPU sont transparents, ou (en option) encapsulent les en-têtes des trains avec leur propre adresse comme adresse-source. La ou les applications ATC peuvent lire cette adresse et donc savoir localiser le train par le réseau, si tel est leur besoin. Un OPU (Operation center Protocol Unit) associé à une application centrale peut alternativement gérer l'adressage IP montant en fonction des adresses-source de la décapsulation descendante. On peut ainsi s'affranchir de toute fonctionnalité de mobilité au niveau IP, si c'est nécessaire. De plus dans ce cas, rien ne s'oppose à avoir un sous-réseau et de multiples adresses IP à bord du train.
- En alternative (A), le recours à des échanges de servitude entre CPU via des protocoles du monde IP, prépare l'arrivée sur le marché Internet de fonctions de mobilité verticale au sens des réseaux de radiocommunications cellulaires. Cette mobilité verticale généralisera de tels échanges de servitude entre les couches de transmission et de commutation, avec des interfaces à finaliser à partir de l'ébauche proposée.
- A des fins simplificatrices, le système MIMUFIP peut inclure une fonction de concentration des liaisons filaires de distribution entre CPU et PAR (PARC ou PARI) par l'intermédiaire de commutateurs de niveau 2 (« ponts ») ou - par exemple - de hubs Ethernet. Les tables d'aiguillage entre entrées et sorties de tels organes seront remplies en conséquence.
- Dans une réalisation particulière de l'invention, les différentes liaisons radio entre bornes et train pourront réutiliser des modules WLAN (Wifi, Wifi5 ou dérivés), en désactivant ou n'activant pas le protocole de niveau MAC (CSMA/CA) de ces modules, et en lui superposant le protocole MAC de MIMUFIP. Au lieu d'un éventuel TDMA, il est même possible d'exploiter partiellement le CSMA/CA pour réaliser un multiplexage secondaire entre trains ou entre bornes, tout en gardant le multiplexage fréquentiel comme moyen principal.

## Revendications

1. Système de communication le long d'un Axe de transport guidé, rectiligne ou curviligne, entre des trains sous couverture radio d'une infrastructure de stations ou Points d'Accès (PAR) déployés le long de l'Axe, et adossés à un réseau de transit, du type synchrone ou asynchrone sous IP (Internet Protocol),
**caractérisé en ce que** les PAR contigus sont regroupés en grappes, sous l'autorité de contrôleurs (CPU), et que le réseau de dessertes entre PAR et trains est sans fil et utilise des liaisons bidirectionnelles à faisceaux orientés dans un sens de parcours de l'Axe, avec symétrisation de la structure dans le sens opposé, pour doubler la capacité ou redonder un service critique.
**en ce que** les trains sont desservis en partage fréquentiel (FDMA), à partir de PAR multicanaux dits PARC, à m canaux fréquentiels, ou plus avantageusement d'une succession de PAR monocanal dits PARI de densité m fois plus forte.
**en ce que** des recouvrements d'au moins une interstation ou une section entre PARC ou encore une section entre PARI de même canal, sont pratiqués entre les grappes, de manière que chaque CPU puisse percevoir et anticiper les mouvements des trains dans les interstations ou stations limitrophes, et que la synchronisation éventuelle des émissions/réception soit assurée par des moyens fixes entre CPU ou entre PAR de grappes différentes.

2. Système de communication selon la revendication 1, **caractérisé par** une desserte à base radio ou hyperfréquence à diversité de fréquence, en formats saut ou rampe de fréquence, étalement de spectre, multiporteuses, ou impulsions à large bande, et à diversité de liens fréquentiels simultanés.

3. Système de communication selon les revendications 1 et 2, **caractérisé par** une diversité spatiale pour l'installation des antennes, tant au niveau des PAR (PARC ou PARI), qu'au niveau des trains.

4. Système de communication selon les revendications 1 et 2, **caractérisé par** une fonction d'autolocalisation des trains opérée par la couche MAC (Medium Access Control) des CPU en coopération avec les équipements conjugués embarqués, et s'appuyant directement sur la mesure instantanée de variables de la couche physique radio ou le relevé instantané des adresses MAC.

5. Système de communication suivant les revendications 1, 2 et 4, **caractérisé par** la réservation pour chaque train d'un canal fréquentiel pour la ou les transmissions sol-train, la transmission train-sol, avec gestion déterministe des priorités, et un éventuel mécanisme de multiplexage secondaire en TDMA au sein des canaux.

6. Système de communication selon les revendications 1, 2, 4 à 5, **caractérisé par** une fonction de micro-mobilité réalisée au sein de chaque grappe en activant les bornes à la fréquence allouée en regard du train considéré, avec substitutions des bornes successives lorsque le train progresse, et **caractérisé en outre par** un enchaînement de la micro-mobilité de grappe en grappe, exploitant le recouvrement des grappes, et l'écoute par le CPU courant de la ou des interstations limitrophes, de sorte que ladite micro-mobilité peut fonctionner seule, supporter la mobilité de la couche réseau (mobile IP), ou coopérer avec elle.

7. Système de communication selon les revendications 1, 2, 4 à 6, **caractérisé par** un mécanisme d'accès MAC à réservation de canaux fréquentiels, alloués par chaque CPU, à partir d'un groupe de m canaux, pour une capacité de m trains simultanés dans son emprise, éventuellement étendue par un multiplexage dans le temps au sein des canaux.

8. Système de communication selon les revendications 1, 2, 4 à 7, **caractérisé par** une réutilisation de canaux fréquentiels ordonnée géographiquement par chaque CPU, afin que la distance de réutilisation soit de l'ordre de la longueur de l'emprise, avec une résolution définie par un partage spatial de l'emprise en une zone centrale et deux marges latérales (en deçà des frontières), lesdites marges étant de longueur supérieure à celles des recouvrements de grappes de la revendication 1.

9. Système de communication selon les revendications 1, 2, 4 à 8, **caractérisé par** une allocation ou réallocation de fréquence déclenchée par un une séquence de doublets, émise par les bornes courantes concernées, chaque doublet contenant le numéro de canal courant et le nouveau numéro de canal sur lequel le train doit basculer, avec réitération de la commande jusqu'à son exécution par l'équipement du train.

10. Système de communication selon les revendications 1, 2, 4 à 8, **caractérisé par** la tenue d'un synopsis de l'allocation fréquentielle par le CPU dans son emprise, et la diffusion de ce synopsis via les bornes de son emprise, le dit synopsis étant propagé au CPU voisin, soit au moyen d'une extension de la liaison de synchro entre grappes, soit directement par la radio, soit encore par l'intermédiaire des trains circulant entre les grappes, qui le recopient au fil de l'eau.

11. Système de communication selon les revendications 1, 2, 4 à 10, **caractérisé par** un échange des synopsis entre CPU utilisant le réseau de transit et des protocoles de servitude de la suite IP, ou des protocoles particuliers de communications entre routeurs, ce qui constitue une alternative (A) par rapport à l'utilisation du réseau de distribution entre CPU.

12. Système de communication selon les revendications 1, 2, 4 à 7, 9 et 10, **caractérisé par** une coopération entre CPU, basée sur les synopsis échangés, organise la réutilisation géographique train par train en ménageant à chaque train une fenêtre spatiale de garde en avant et en arrière de son interstation courante, et qui déclenche une réallocation d'un train sur deux, dès que leurs fenêtres se rencontrent, méthode qui constitue une alternative (B) à la revendication 8.

13. Système de communication selon les revendications 1, 2, 4 à 7, 8 ou 9 à 12, **caractérisé par** une concentration des liaisons filaires de distribution entre CPU et PAR (PARC ou PARI) par l'intermédiaire de commutateurs de niveau 2 (« ponts ») ou par exemple de hubs Ethernet.

14. Système de communication selon les revendications 1, 2, 4 à 7, 9 et 10, particularisé en ce que les différentes liaisons entre bornes et train réutilisent des modules WLAN (Wifi, Wifi5 ou dérivés), en désactivant ou n'activant pas le protocole de niveau MAC (CSMA/CA) de ces modules, et en lui superposant le protocole MAC de la revendication 7.

15. Système de communication selon les revendications 1, 2, 4 à 7, 8 ou 9 à 12, particularisé en ce que le CSMA/CA peut être mis à profit pour réaliser un multiplexage secondaire entre trains ou entre bornes, tout en gardant le multiplexage fréquentiel comme moyen principal.

## Claims

1. A communication system along a rectilinear or curvilinear tracked transport Axis between trains under radio coverage through an infrastructure of stations or Access Points (PAR) provided along the Axis, and backed by a transit network of the synchronous or asynchronous type under IP (Internet Protocol),
**characterized in that** the contiguous PAR are grouped in clusters, under the authority of controllers (CPU), and **in that** the network of serving areas between PARs and trains is wireless and uses bidirectional links with beams oriented in the direction of the travel along the Axis, with a symmetrization of the structure in the opposite direction, to double the capacity or be redundant for a critical service,
**in that** the trains are serviced in frequency distribution (FDMA), from multichannel PARs, also called PARCs, with m frequency channels, or more advantageously from a succession of single-channel PARs also called PARIS, having a m times stronger density,
**in that** overlapping of at least one interstation or a section between PARCs or a section between PARIs having the same channel, occur between the clusters, so that each CPU can detect and anticipate the motions of the trains in the interstations or fringe stations, and **in that** the possible synchronization of emissions/receptions is ensured by fixed means between the CPUs or between the PARs of different clusters.

2. A communication system according to claim 1, **characterized by** a radio-based service or hyperfrequence-based service with a frequency diversity, in frequency hopping or ramp, spread spectrum, multicarrier, wide band pulses formats, and with a simultaneous frequency links diversity.

3. A communication system according to claims 1 and 2, **characterized by** a space diversity for the installation of antennae, for the PARs (PARCs or PARIs), as well as for the trains.

4. A communication system according to claims 1 and 2, **characterized by** a function of auto-localization of the trains carried out by the MAC (Medium Access Control) layer of the CPUs, in cooperation with the combined equipment aboard and directly based on the instant measurement of variables of the radio physical layer or the instant statement of the MAC addresses.

5. A communication system according to claims 1, 2 and 4, **characterized by** the clearing, for each train, of a frequence channel for the ground-train transmission(s), the train-ground transmission, with a deterministic management of priorities, and a possible secondary TDMA multiplexing, within the channels.

6. A communication system according to claims 1, 2, 4 to 5, **characterized by** a function of micro-mobility within each cluster, by activating the terminals at the assigned frequency relative to the train considered, with substitutions of successive terminals when the train moves forward, and further **characterized by** a continuity of the micro-mobility from cluster to cluster, taking advantage of the overlapping of the clusters, and the listening by the current CPU of the fringe interstation(s), so that said micro-mobility can operate on its own, support the mobility of the network layer (IP mobile), or cooperate therewith.

7. A communication system according to claims 1, 2, 4 to 6, **characterized by** a MAC access mechanism with the clearing of frequency channels, assigned by each CPU, from a group of m channels, for a capacity of m simultaneous trains in the coverage area thereof, if need be extended by a time multiplexing within the channels.

8. A communication system according to claims 1, 2, 4 to 7, **characterized by** a re-utilization of frequency channels, geographically ordered by each CPU, so that the distance of re-utilization is of the order of the length of the coverage area, with a resolution defined by a spatial distribution of the coverage area into a central area and two side margins (beyond the boundaries), said margins having a length grater than that of the cluster overlapping of claim 1.

9. A communication system according to claims 1, 2, 4 to 8, **characterized by** an assignment or a re-assignment of frequency triggered by a dipole sequence emitted by the related current terminals, each dipole containing the current channel number and the new channel number which the train must switch to, with the repetition of the command until it is executed by the equipment in the train.

10. A communication system according to claims 1, 2, 4 to 8, **characterized by** the writing of a synopsis of the frequency assignment by the CPU in the coverage area thereof, and the diffusion of such synopsis via the terminals of the coverage area thereof, said synopsis being extended to the neighboring CPU, either through an extension of the clusters synchronization link, or directly through the radio, or through the trains circulating between the clusters, which copy it when and as they move forward.

11. A communication system according to claims 1, 2 4 to 10, **characterized by** the exchange of synopsis between the CPUs using the transit network and auxiliary protocols of the IP sequence, or particular protocols for communication between the routers, which is an alternative (A) with respect to the utilization of the distribution network between the CPUs.

12. A communication system according to claims 1, 2 4 to 7, 9 and 10, **characterized by** a cooperation between the CPUs, based on the exchanged synopsis, which sets up the geographical realization, train by train, by arranging, in each train, a watch space window upstream and downstream of the current interstation thereof, and which triggers a reallocation of one train out of two, as soon as their windows meet, a method which is an alternative solution (B) to claim 8.

13. A communication system according to claims 1, 2 4 to 7, 8 or 9 to 12, **characterized by** the concentration of wire distribution links between the CPUs and the PARs (PARCs or PARIs) through NIP switches ("bridges") or for example through an Ethernet hub.

14. A communication system according to claims 1, 2 4 to 7, 9 and 10, **characterized in that** the various links between the terminals and the train re-use WLAN (Wifi, WiFi5 or derivatives) modules, by de-activating or not activating the MAC (CSMA/CA) level protocol of such modules, and by superimposing the MAC protocol according to claim 7.

15. A communication system according to claims 1, 2 4 to 7, 8 or 9 to 12, **characterized in that** the CSMA/CA can be used for making a secondary multiplexing between the trains or between the terminals, while keeping the frequency division multiplexing as the main means.

## Patentansprüche

1. Kommunikationssystem entlang einer geführten geradlinigen oder gekrümmten Transportachse zwischen Zügen unter Funkabdeckung einer Infrastruktur aus Stationen oder Zugangspunkten (PAR), die entlang der Achse aufgestellt wurden und an ein Transitnetz angelehnt sind, vom synchronen oder asynchronen Typ unter IP (Internet Protocol),
**dadurch gekennzeichnet, dass** die angrenzenden PARs in Clustern unter der Autorität von Überwachungen (CPU) zusammengefasst sind und dass das Versorgungsnetz zwischen den PARs und den Zügen schnurlos ist und Verbindungen in beide Richtungen mit in einer Verlaufsrichtung der Achse ausgerichteten Strahlen mit einer Symmetrisierung der Struktur in der umgekehrten Richtung verwendet, um die Kapazität zu verdoppeln oder einen kritischen Dienst zu redundieren.
dass die Züge in gemeinsamer Nutzung von Frequenzen (FDMA) ausgehend von als PARC bezeichneten Multikanal-PARs mit m Frequenzkanälen oder vorteilhafter mit einer Folge von als PARI bezeichneten Monokanal-PAR mit einer um m-Male stärkeren Dichte versorgt werden.
dass die Abdeckungen von wenigstens einer Zwischenstation oder einem Abschnitt zwischen den PARC oder auch einem Abschnitt zwischen den PARIs mit demselben Kanal zwischen den Clustern derart praktiziert werden, dass jede CPU die Bewegungen der Züge in den Zwischenstationen oder angrenzenden Stationen erfassen und vorwegnehmen kann und dass die eventuelle Synchronisation des Versands / Empfangs durch feste Mittel zwischen der CPU oder zwischen dem PAR unterschiedlicher Cluster gewährleistet wird.

2. Kommunikationssystem gemäß Anspruch 1, **gekennzeichnet durch** eine Versorgung auf Funk- oder Hyperfrequenzbasis mit verschiedenen Frequenzen in den Formaten Sprung oder Frequenzrampe, Spektrumsspreizung, Vielträger oder Breitbandimpulse und mit verschiedenen simultanen frequenziellen Verkettungen.

3. Kommunikationssystem gemäß Anspruch 1 und 2, **gekennzeichnet durch** einen räumlichen Mehrfachempfang für die Installation der Antennen sowohl auf dem Niveau der PAR (PARC oder PARI) als auch auf dem Niveau der Züge.

4. Kommunikationssystem gemäß Anspruch 1 und 2, **gekennzeichnet durch** eine Autolokalisierungsfunktion der Züge, die **durch** die Schicht MAC (Medium Access Control) der CPU in Zusammenarbeit mit den gekoppelten integrierten Ausrüstungen betrieben wird und sich direkt auf die sofortige Messung von Variablen der physischen Funkschicht oder die sofortige Ablesung der Adressen MAC stützt.

5. Kommunikationssystem gemäß Anspruch 1, 2 und 4, **gekennzeichnet durch** die Reservierung eines Frequenzkanals für jeden Zug für die Übertragung oder Übertragungen Boden / Zug, die Übertragung Zug / Boden mit deterministischer Verwaltung der Prioritäten und einem eventuellen sekundären Multiplexmechanismus in TDMA innerhalb der Kanäle.

6. Kommunikationssystem gemäß Anspruch 1, 2, 4 bis 5, **gekennzeichnet durch** eine Mikro-Mobilitätsfunktion, die innerhalb jedes Clusters **durch** Aktivierung der Anschlüsse in der in Anbetracht des jeweiligen Zuges zugeordneten Frequenz mit Substitution der aufeinander folgenden Anschlüsse realisiert wird, wenn der Zug weiterfährt, und darüber hinaus **durch** eine Aufeinanderfolge der Mikromobilität von Cluster zu Cluster **gekennzeichnet**, die die Abdeckung der Cluster ausnutzt, und das Abhören der angrenzenden Zwischenstation oder Zwischenstationen von der aktuellen CPU derart, dass die genannte Mikromobilität allein funktionieren, die Mobilität der Netzschicht (mobiles IP) unterstützen oder mit ihr zusammenwirken kann.

7. Kommunikationssystem gemäß Anspruch 1, 2, 4 bis 6, **gekennzeichnet durch** einen Zugangsmechanismus MAC mit Reservierung von Frequenzkanälen, die **durch** jede CPU ausgehend von einer Gruppe von m Kanälen für eine Kapazität von m gleichzeitigen Zügen unter ihrem Einfluss zugeordnet werden, der sich eventuell über ein Multiplex im Zeitverlauf innerhalb der Kanäle erstreckt.

8. Kommunikationssystem gemäß Anspruch 1, 2, 4 bis 7, **gekennzeichnet durch** eine Wiederverwendung von Frequenzkanälen, die geographisch **durch** jede CPU angeordnet wird, damit die Wiederverwendungsdistanz sich in der Größenordnung der Länge des Einflusses mit einer Auflösung befindet, die **durch** eine räumliche gemeinsame Benutzung des Einflusses in einem zentralen Bereich und zwei lateralen Margen (außerhalb der Grenzen) definiert wird, wobei die genannten Margen eine größere Länge aufweisen als die der Abdeckungen von Clustern des Anspruchs 1.

9. Kommunikationssystem gemäß Anspruch 1, 2, 4 bis 8, **gekennzeichnet durch** eine Zuordnung oder erneute Zuordnung von Frequenzen, welche **durch** eine Dipolfrequenz ausgelöst wird, die **durch** die betroffenen aktuellen Anschlüsse ausgegeben wird, wobei jeder Dipol, die aktuelle Kanalnummer und die neue Kanalnummer enthält, auf die der Zug umgestellt werden soll, und zwar mit Reiteration des Befehls bis zu seiner Ausführung **durch** die Ausrüstung des Zuges.

10. Kommunikationssystem gemäß Anspruch 1, 2, 4 bis 8, **gekennzeichnet durch** den Halt einer Synopse der Frequenzzuordnung **durch** die CPU unter ihrem Einfluss und die Verbreitung dieser Synopse über die Anschlüsse unter ihrem Einfluss, wobei die genannte Synopse zu benachbarten CPU entweder **durch** eine Erweiterung der Synchronisationsverbindung zwischen Clustern oder direkt per Funk oder auch über die Züge, die zwischen den Clustern fahren und die sie im Verlauf der Zeit abkopieren, weitergeleitet wird.

11. Kommunikationssystem gemäß Anspruch 1, 2, 4 bis 10, **gekennzeichnet durch** einen Austausch der Synopsen zwischen der CPU, die das Transitnetz benutzt, und den Stromverteilerprotokollen der Folge IP oder der besonderen Kommunikationsprotokolle zwischen Routern, was eine Alternativ (A) im Verhältnis zur Verwendung des Verteilernetzes zwischen CPUs darstellt.

12. Kommunikationssystem gemäß Anspruch 1,2, 4 bis 7, 9 und 10, **gekennzeichnet durch** eine Kooperation zwischen CPUs, die auf den ausgetauschten Synopsen basiert, die geographische Wiederverwendung Zug für Zug organisiert, indem bei jedem Zug ein räumliches vorderes und hinteres Startfenster seiner aktuellen Zwischenstation eingerichtet wird und die eine Neuzuordnung jedes zweiten Zugs auslöst, sobald ihre Fenster sich treffen - ein Verfahren, das eine Alternative (B) zu Anspruch 8 darstellt.

13. Kommunikationssystem gemäß Anspruch 1, 2, 4 bis 7, 8 oder 9 bis 12, **gekennzeichnet durch** eine Konzentration der drahtlosen Verteilerbindungen zwischen CPU und PAR (PARC oder PARI) mittels Niveauschaltern 2 ("Points") oder z. B. von Ethernet Hubs.

14. Kommunikationssystem gemäß Anspruch 1, 2, 4 bis 7, 9 und 10, **dadurch gekennzeichnet, dass** die unterschiedlichen Verbindungen zwischen Anschlüssen und Zug die Module WLAN (Wifi, Wifi5 oder Derivate) durch die Deaktivierung oder die nicht erfolgte Aktivierung des Niveauprotokolls MAC (CSMA/CA) dieser Module und durch Überlagerung des Systems durch das Protokoll MAC aus Anspruch 7 wieder verwendet.

15. Kommunikationssystem gemäß Anspruch 1, 2, 4 bis 7, 8 oder 9 bis 12, **dadurch gekennzeichnet, dass** das CSMA / CA genutzt werden kann, um ein sekundäres Multiplexen zwischen Zügen oder zwischen Anschlüssen zu realisieren, wobei gleichzeitig das frequenzielle Multiplexen als Hauptmittel beibehalten werden kann.
